# EUROPEAN PATENT SPECIFICATION

(11) **EP 2 523 794 B1**
(45) Date of publication and mention of the grant of the patent: **25.12.2019**
(21) Application number: 11700242.8
(22) Date of filing: 06.01.2011
(51) Int. Cl.: B29C 45/26, B29C 45/34, B29C 45/36, B29C 45/43, B29K 105/00

(54) **INJECTION MOLD STACK AND MOLDING APPARATUS**
Spritzgießwerkzeugstapel und Formvorrichtung
Moule d'injection à empilage et machine de moulage

(30) Priority: 11.01.2010 EP 10150412
(43) Date of publication of application: 21.11.2012
(73) Proprietor: Plastipak BAWT S.à.r.l., 4940 Bascharage (LU)
(72) Inventor: DUCHATEAU, Roald, B-2930 Brasschaat (BE)
(74) Representative: Matkowska, Franck
(86) International application number: PCT/EP2011/050132
(87) International publication number: WO 2011/083135

(56) References cited:
- EP-A2- 0 790 116
- EP-A2- 0 790 116
- US-A1- 2004 145 082
- US-A1- 2004 145 082
- US-A1- 2007 148 280
- US-A1- 2007 148 280

## Description

### Technical field

The present invention relates to a novel injection mold stack and to a molding apparatus comprising this mold stack. This molding apparatus can be used in the field of plastic industry for manufacturing molded articles, and in particular plastic preforms that are adapted to be subsequently stretched into a rigid hollow article.

### Prior art

A typical molding apparatus comprises an injection unit and an injection mold stack. The injection unit is used for injecting one or several melted thermoplastic materials under pressure into one or several molding cavities of the mold stack. This injection unit can be of a reciprocating screw type or of a two-stage type.

Different types of injection mold stacks are described in PCT application WO-A-2009/030018 to Husky Injection Molding Systems Ltd.

An injection mold stack generally includes a core assembly and a cavity assembly comprising a gate insert, a cavity insert, and a neck ring. In use, a core of the core assembly is positioned inside the cavity assembly, and delimits a molding cavity with the neck ring, the cavity insert and the gate insert, said molding cavity having the shape of the injection-molded article. During the injection process, the core assembly and the cavity assembly are aligned and are held together by a clamp force that has to be sufficiently strong for withstanding the pressure of the injected plastic material. Once the article is being molded and cooled down, it has to be ejected form the mold stack. For enabling this ejection, the core assembly and the cavity assembly can be moved away from the neck ring in a longitudinal direction and the neck ring the is made of two half parts that can moved away in a lateral direction.

A first know type of injection mold stack, commonly called "core-lock type", is depicted for example on figures 1 and 4 of PCT application WO-A-2009/030018.

In a mold stack of the core-lock type, the front face of the neck ring has a conical male locking portion and the rear face of the neck ring has also a conical male locking portion. The "front" face is the face of the neck ring that is oriented towards the core assembly, and the "rear" face is the face of the neck ring that is oriented towards the cavity insert. The core assembly comprises an external lock ring whose rear face (oriented towards the neck ring) forms a conical locking cavity for receiving and locking the conical male locking portion of the front side of the neck ring. This conical locking cavity of the lock ring and the conical male locking portion of the front face of the neck ring are used for aligning and locking the neck ring with the core assembly. On the opposite side of the neck ring, the conical male locking portion of the rear face of the neck ring is used for aligning and locking the neck ring with the cavity insert.

In an injection molding stack having the particular structure of figure 1 or figure 4 of PCT application WO-A-2009/030018, air channels that are terminated by an air exhaust end positioned closed to the molded article can be advantageously drilled within the lock ring, and in use, air can be blown within these air channels for assisting the ejection of the article.

In a mold stack of the core-lock type, the neck ring can be easily and precisely aligned with the core assembly on one side and with the cavity insert on the other side. But with this type of molding stack, the height of the neck ring necessarily follows the length of the molded article, which is a limitation on the mold compactness or on the length or design of the molded articles that can be manufactured.

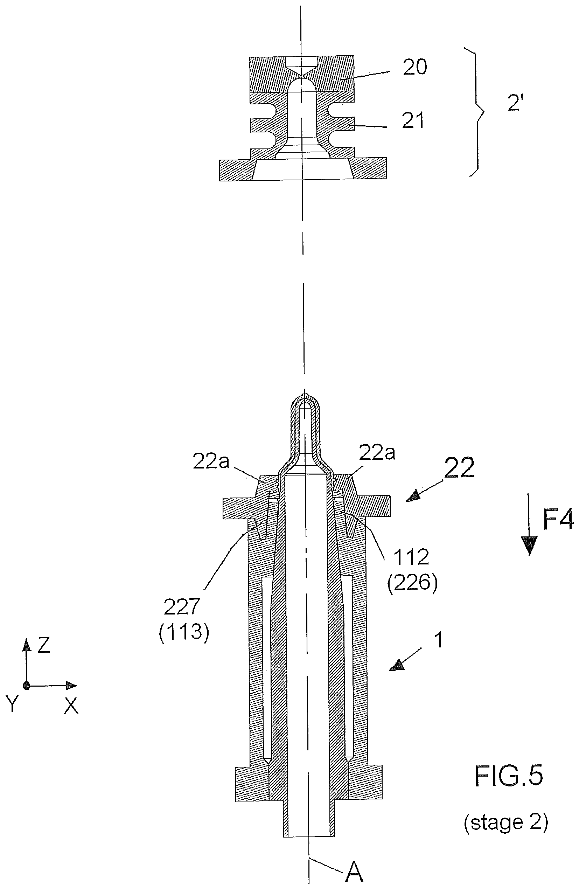

Figure 5 of PCT application WO-A-2009/030018 shows a particular embodiment of a mold stack of the core-lock type for making a molded article, like a preform, having a support ledge portion, also commonly referred as neck support ring, and wherein the support ledge portion is positioned at the junction between the neck ring and the cavity insert. With this particular configuration of figure 5, it is unfortunately not possible to have air channels that are drilled within the lock ring of the core assembly and that are adapted to blow air towards the molded article for assisting the ejection of the article.

A second known type of injection mold stack, commonly called "cavity-lock type ", is depicted for example on figure 2 of PCT application WO-A-2009/030018.

In a mold stack of the cavity-lock type, only the rear face of the neck ring has a conical male locking portion and the front face of the neck ring forms a conical locking cavity adapted to fit the neck ring and the core assembly together. The locking of the neck ring is thus obtained only on the rear side oriented towards the cavity insert. The neck ring used in this type of mold stack is advantageously more compact than the neck ring used in a mold stack of the core-lock type, but the alignment of the neck ring with the core assembly is less precise, and the mold stack is less robust, which can lead to detrimental misalignment problems of the mold parts during the injection process. In addition, a mold stack of the cavity-lock type needs a higher clamp force for holding the mold parts together, because the contact surfaces between notably the core assembly and the neck ring are less important than in mold stack of the core-lock type.

During the injection of thermoplastic material in the mold cavity of an injection mold stack, it is mandatory to escape air from the mold cavity towards the outside of the injection mold stack. To this end, an air venting channel is generally provided between the core assembly and the neck ring of the injection mold stack, like for example the air venting channel depicted on figures 19 and 20 of European patent EP-A-0 790 116. If no or insufficient venting is foreseen, the mold cavity may not be properly filled and this can lead to a defect such as short-shot, diesel effect, etc... Document US2004145082 A1 discloses an injection mold stack.

### Summary of the invention

A first objective of the invention is to propose a novel injection mold stack that overcomes both the aforesaid drawbacks of the core-lock type mold stack and drawbacks of the cavity lock-type mold stack, and that also improves the venting of the mold cavity.

This first objective is achieved by the injection mold stack of claim 1.

Another object of the invention is a core assembly of an injection mold stack, as defined in claim 14.

Another object of the invention is a molding apparatus comprising an injection mold stack as the one previously defined, and an injection unit for injecting a melted thermoplastic material in the mold cavity of the said injection mold stack.

Another object of the invention is the use of the aforesaid injection mold stack or of the aforesaid molding apparatus for molding a plastic article, and more particularly a plastic preform.

### Brief description of the drawings

The technical characteristics and advantages of the invention will appear more clearly on reading the following detailed description of several embodiments, which embodiments are described by way of non-exhaustive and non-limiting examples, and with reference to the appended drawings, as follows:
- Figure 1 is a 3D exploded view of a first embodiment of an injection mold stack of the invention containing a molded plastic preform.

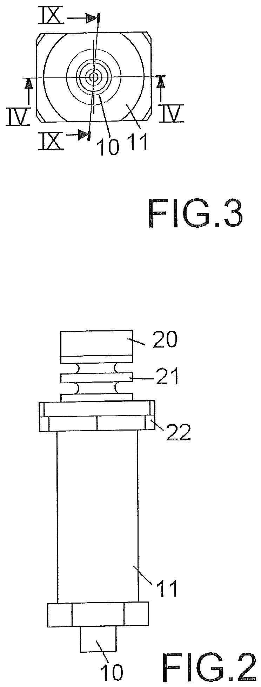

- Figure 2 is a front view of the injection mold stack of figure 1.
- Figure 3 is a right side view of the injection mold stack of figure 2.
- Figure 4 is a longitudinal cross sectional view of the injection mold stack and preform of figure 1 in plane IV-IV of figure 3, the injection mold stack being in its locked state.
- Figures 5 to 8 are longitudinal cross sectional views of the injection mold showing the main successive stages for unlocking and opening the injection mold stack of figure 4 and ejecting the molded preform.
- Figure 9 is a longitudinal cross sectional view of the injection mold stack and preform of figure 1 in plane IX-IX of figure 3, the injection mold stack being in its locked state.
- Figure 10 is an enlargement view of a zone G of the injection mold stack of figure 4.
- Figure 11 is a longitudinal cross sectional view of a second embodiment of an injection mold stack which is not part of the invention.
- Figure 12 is a longitudinal cross sectional view of a third embodiment of an injection mold stack of the invention.

### Detailed description

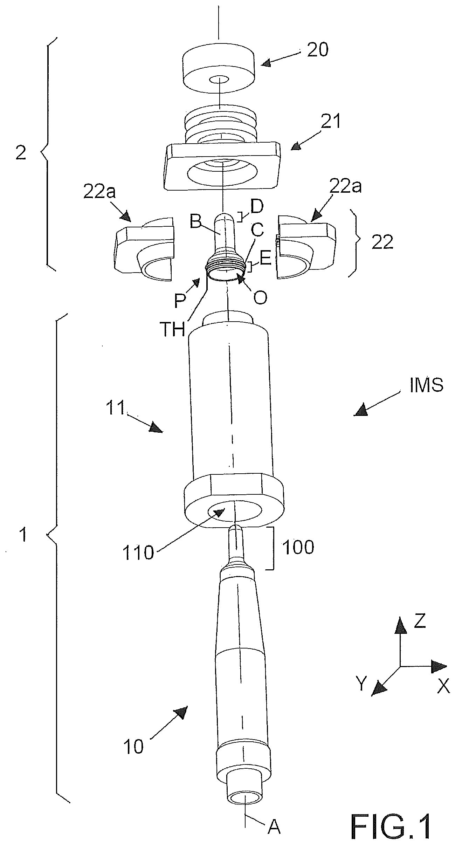

Referring to figure 1, an injection mold stack (IMS) of the invention comprises a core assembly 1 and a cavity assembly 2. The core assembly 1 comprises a core 10 and an external lock ring 11. The cavity assembly 2 comprises a gate insert 20, a cavity insert 21 and a pair of moveable half neck rings 22a adapted to form a neck ring 22 that is positioned between the cavity insert 21 and the core assembly 1.

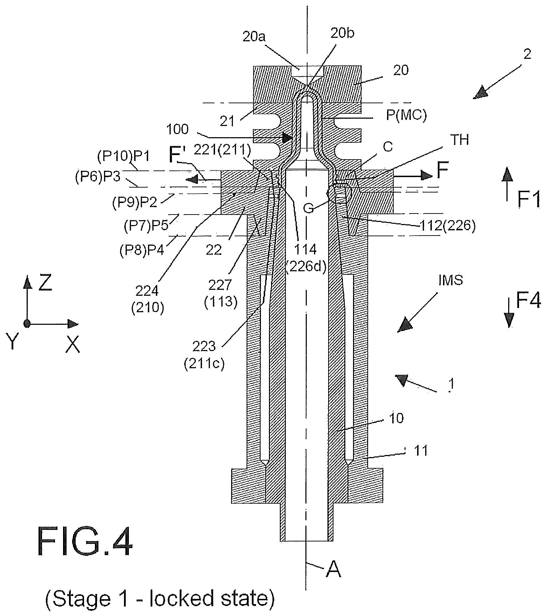

Figure 4 shows a longitudinal cross section of the injection mold stack IMS of figure 1 in its locked state. On figure 4, this injection mold stack IMS is containing a molded plastic preform P. The invention is however not limited to the molding of plastic preforms, but the injection mold stack of the invention can be adapted to mold any plastic article.

Said preform P (figures 1 and 4) knowingly comprises a tubular main body B closed at one end (hemispherical bottom end D) and a neck portion E comprising a neck support ring C, and terminated by a pouring opening O. In the particular example of figure 1, this neck portion E also comprises a threaded part TH for screwing a closure cap onto the preform P. Said preform P can be subsequently biaxially stretched in order to form a rigid hollow container, for example by using any well known stretch-blow molding technique.

In reference to figure 4, when the injection mold stack is configured in its locked state and is used to manufacture a molded preform P, the core assembly 1 (core lock 11 and core 10), and all the parts (neck ring 22, cavity insert 21, gate insert 20) of the cavity assembly 2 are aligned and have the same longitudinal central axis A. A protruding portion 100 of the core 10 is inserted within the cavity assembly 2 and delimits a molding cavity (MC) with the neck ring 22, the cavity insert 21 and the gate insert 20 of the cavity assembly 2. In figure 4, this molding cavity MC is filled with a thermoplastic material forming the preform P.

The injection under pressure of the thermoplastic material inside the molding cavity MC is performed in a standard way through the injection orifice 20b of an injection nozzle 20a of the gate insert 20. This injection nozzle 20a is knowingly assembled with the exit of a standard injection unit (not shown) that can be for example of a reciprocating screw type or of a two-stage type. The injection mold stack (IMS) and the injection unit form a molding apparatus.

The locking of the neck ring 22 on its rear side with the cavity insert 21, and on its front side with the lock ring 11 of the core assembly 1, is novel and is obtained thanks to a specific design of the lock ring 11, neck ring 22 and cavity insert 21.

### Neck ring 22

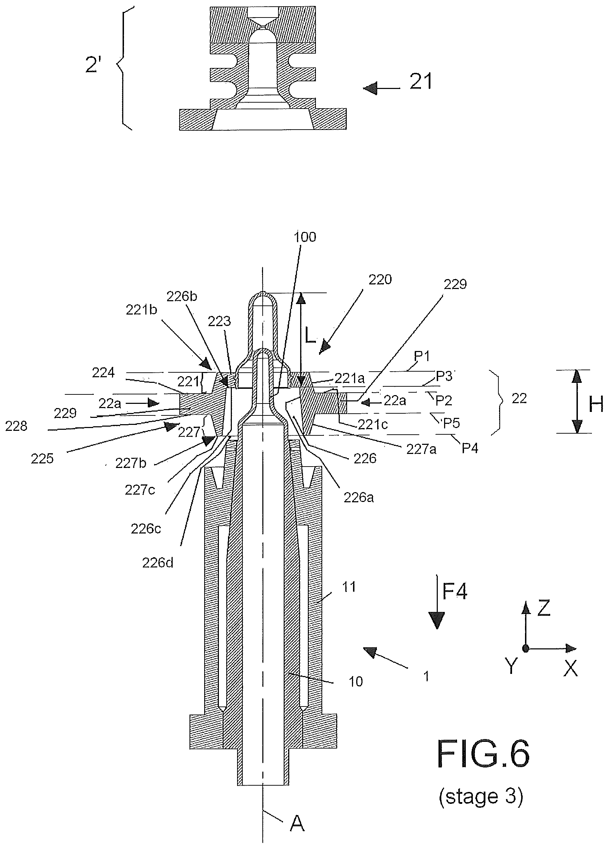

In reference to figure 6, the rear face 220 of the neck ring 22 that is oriented towards the cavity insert 21 comprises a central rear male locking portion 221 having an outer peripheral wall 221a of conical shape aligned with the longitudinal axis A. The apex 221b of this conical wall 221a is oriented towards the cavity insert 21 and is extended by a rear wall 223 that is perpendicular to the longitudinal axis A and forms a first assembling plane P1. The base 221c of this conical outer wall 221a is oriented towards the lock ring 11 and is extended by an annular rear wall 224 that is perpendicular to the longitudinal axis A and forms a second plane P2.

In reference to figure 6, the front face 225 of the neck ring 22 (face 225 oriented towards the lock ring 11) comprises a central front locking cavity 226 that is aligned with the longitudinal axis A and a peripheral front male locking portion 227.

This central locking cavity 226 comprises a lateral wall 226a of conical shape, that is aligned with the longitudinal axis A, and whose apex 226b is oriented towards the cavity insert 21. Said apex 226b of the conical wall 226a extended by a bottom wall 226c of the central locking cavity. More particularly, in the particular example of figure 4, the bottom wall 226c of the central locking cavity defines a plane P3 that is perpendicular to the longitudinal axis A and is positioned between planes P1 and P2.

The peripheral front male locking portion 227 comprises an outer peripheral wall 227a of conical shape that surrounds the central front locking cavity 226. The apex 227b of this conical outer peripheral wall 227a is oriented towards the lock ring 11, and is extended by a front wall 227c defining a fourth plane P4 perpendicular to the longitudinal axis A. As shown on figure 6, the total height H of the neck ring 22 is the distance between rear plane P1 and front plane P4.

The central locking cavity 226 is opened for partly inserting the lock ring 11 inside the cavity 226, and comprises more particularly a front opening 226d that is oriented towards the opposite lock ring 11. This front opening 226d is provided in the front wall 227c of the front male locking portion 227.

The base of the conical outer wall 227a of the front male locking portion 227 is oriented towards the neck ring 22 and is extended by an annular front wall 228 that forms a fifth plane P5. This fifth plane P5 is perpendicular to the longitudinal axis A and is positioned between planes P4 and P2.

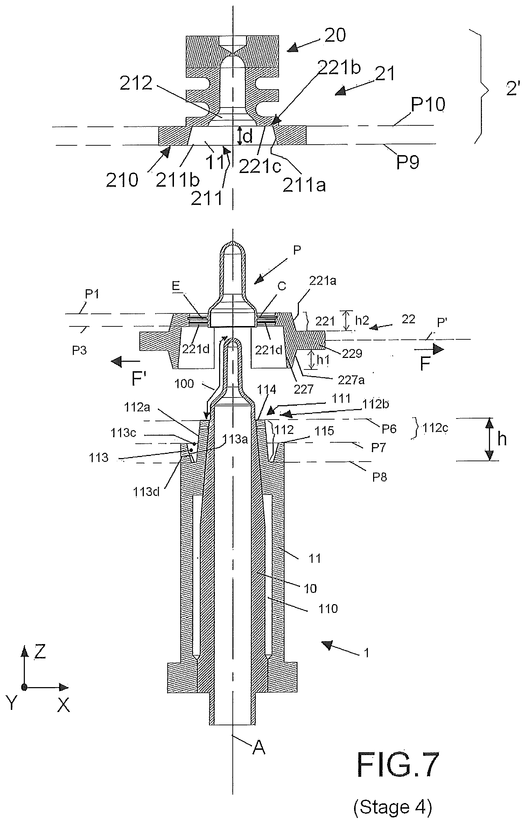

In the particular example of figure 6, each half neck ring 22a of the neck ring 22 comprises an outer central protruding part 229 extending between plane P2 and P5. Theses parts 229 of the half neck rings 22a are each assembled with a hydraulic or pneumatic jack (not shown). These jacks are used for either moving laterally apart (figure 4/ arrows F, F') the half neck rings 22a into the opened position of figure 7, or on the contrary for pushing and moving laterally closer the half neck rings 22a in the locked position of figure 4.

In reference to figure 7, the rear male locking portion 221 of the neck ring 22 comprises also an inner lateral wall 221d that is delimited by planes P1 and P3 and that is adapted to form the neck portion E of the preform P. In this particular example, the neck support ring C of the preform is completely encapsulated in the male locking portion 221 of the neck ring 22. In another variant, the supporting face of the neck support ring C that is used for supporting the preform in the blowing mould could be positioned in plane P1, i.e. at the transition between the neck ring 22 and the cavity insert 21.

### Lock ring 11

In reference to figure 7, the lock ring 11 is a tubular piece comprising a longitudinal channel 110 that is opened at both ends and is adapted for housing the core 10. The core 10 is inserted within the channel 110 of the lock ring 11 and is rigidly assembled with the lock ring 11, in order to form a monolithic core assembly 1, and in such a way that the rear part 100 of the core 10 is protruding outside the rear end 111 of the lock ring 11 (end 111 of the lock ring 11 oriented towards the neck ring 22).

In reference to figure 7, the lock ring 11 comprises a central rear male locking portion 112 and a rear annular cavity 113 surrounding the said central rear male locking portion 112.

The central rear male locking portion 112 comprises an outer peripheral wall 112a of conical shape that is aligned with the central longitudinal axis A. The taper angle of the conical wall 112a of the central rear male locking portion 112 of the lock ring 11 is equal to the taper angle of the conical lateral wall 226a of the central front locking cavity 226 of the necking 22.

The apex 112b of the central rear male locking portion 112 is oriented towards the neck ring 22, and is extended by a rear wall 114 forming a plane P6 perpendicular to the longitudinal axis A.

The rear annular cavity 113 comprises a lateral wall 113a of conical shape surrounding the central rear male locking portion 112. The taper angle of this conical lateral wall 113a is equal to the taper angle of the outer peripheral conical wall 227a of the peripheral front male locking portion 227 of the neck ring 22.

The base of this lateral wall 113a of conical shape is oriented towards the neck ring 22 and is extended by an annular rear wall 115 surrounding the cavity 113 and forming a plane P7 perpendicular to the longitudinal axis A.

The rear annular cavity 113 comprises an annular opening 113c in rear wall 115. Said annular opening 113c is oriented towards the neck ring 22 and is adapted for inserting the front male locking portion 227 of the neck ring 22 inside the annular cavity 113.

The bottom wall 113d of the annular cavity 113 forms a plane P8, that is perpendicular to the longitudinal axis A.

In the particular embodiments depicted on the appended figures, the central rear male locking portion 112 of the lock ring 11 preferably comprises a protruding part 112c (see e.g. figure 7) that protrudes outside the rear annular cavity 113 towards the neck ring 22. This protruding part 112c corresponds to the part of the rear male locking portion 112 that extends between planes P6 and P7.

In another variant however, the rear male locking portion 112 can be completely surrounded on is whole height h (i.e. distance between planes P6 and P8) by the rear annular cavity 113, and in such a case the rear male locking portion 112 is not protruding outside the annular cavity 113.

The geometry and dimension of the rear annular cavity 113 of the lock ring 11 are adapted to the geometry and dimension of the peripheral front protruding locking portion 227 of the neck ring 22, and the geometry and dimension of the central rear male locking portion 112 of the lock ring 11 are adapted to the geometry and dimension of the central front locking cavity 226 of the neck ring 22 for aligning (longitudinal axis A) and locking the core assembly 1 with the neck ring 22 in plane (X,Y) and in the longitudinal direction Z.

### Cavity insert 21

In reference to figure 7, the cavity insert 21 comprises a front wall 210 oriented towards the neck ring 22 and an opened central front locking cavity 211 aligned with central longitudinal axis A. The front wall 210 defines a plane P9 perpendicular to the central longitudinal axis A. The central front locking cavity 211 comprises a lateral wall 211a of conical shape and a front opening 211d in the front wall 210 for inserting the central rear male locking portion 221 of the neck ring 22 in the central front cavity 211. The taper angle of this lateral wall 211a of conical shape is equal to the taper angle of the outer conical wall 221a of the central rear male locking portion 221 of the lock ring 22.

The apex 211b of the conical wall 211a of the cavity 211 is oriented towards the gate insert 20 and is extended by a wall 211c (bottom wall of locking cavity 211) that is perpendicular to longitudinal axis A and defines an assembling plane P10. The cavity 211 is extended in the longitudinal direction (Z) by a central channel 212 having a geometry adapted to form the body of the preform P.

### Locking and unlocking operations

The locking and unlocking operations of the core assembly 1 with the cavity assembly 2 are now going to be explained. The cavity insert 21 and gate insert 20 are assembled as depicted on figures 5 to 8 in order to form a monolithic assembly 2' that is always fixed during the locking or unlocking operations of the core assembly 1 with the cavity assembly 2.

### Locked state - figure 4

Figure 4 shows the injection mold stack IMS in its locked state. In this locked state of figure 4, the neck ring 22 has been translated longitudinally (arrow F1) in such way that the conical central rear male locking conical portion 221 of the neck ring 22 is fitted into the conical central locking cavity 211 of the cavity insert 21. During this insertion translation movement of the neck ring 22, the conical outer wall 221a of each half neck ring part 22a is in contact with and is guided by the conical lateral wall 211a of the cavity 211 and the neck ring 2 is thus perfectly aligned with the cavity insert 21.

The depth d (figure 7) of the cavity 211 is dimensioned in such a way that in this locked state the front wall 223 of the rear male locking portion 221 of the neck ring 22 abuts against the bottom wall 211c of cavity 211 (planes P1 and P10/figure 4).

In the locked state, the neck ring 22 is immobilized by the conical lateral wall 211a of the central front locking cavity 211 of the cavity insert 21 in all directions in plane (X, Y), and there is no risk of misalignment (axis A) of the neck ring 22 with the cavity insert 21. The neck ring 22 is immobilized in the longitudinal direction Z by the abutment bottom wall 221c of the cavity insert in cooperation with the abutment front wall 223 of the neck ring 22.

In the locked state of figure 4, the core assembly 1 has been also translated longitudinally (arrow F1) in such a way that the conical rear male locking portion 112 of the lock ring 11 is fitted into the conical front locking cavity 226 of the neck ring 22, and the peripheral front male locking portion 227 of the neck ring 22 is fitted into the annular front cavity 113 of the lock ring 11. This fitting movement is performed until the rear wall 114 (plane P6) of the male locking portion 112 of the lock ring 11 abuts against the bottom wall 226 (plane P3) of the cavity 226 of the cavity insert 22, and the bottom wall 113d (plane P8) of the annular cavity 113 of lock ring 11 abuts against the front wall 226c (plane P4) of the lock ring 22.

During this fitting translation movement of the lock ring 11, the male locking portion 112 of the lock ring 11 is in contact with and is guided by the conical lateral wall 226a of the cavity 226 of the neck ring 22, and the conical lateral wall 113a of the annular locking cavity 113 of the lock ring 11 is in contact with and is guided by the conical wall 227a of the male locking portion 227 of the neck ring 22. In the locked state, the lock ring 11 is immobilized by neck ring 22 in all directions in plane (X,Y), and there is no risk of misalignment (axis A) of the lock ring 11 with the neck ring 22. The lock ring 11 is immobilized in the longitudinal direction by the neck ring 22, and the neck ring 22 is immobilized by the lock ring 11 in the longitudinal direction opposite to direction Z. As a result the lock ring 11 is thus perfectly aligned with the neck ring 22, and there is no risk of misalignment of the core assembly 1 with the neck ring 22.

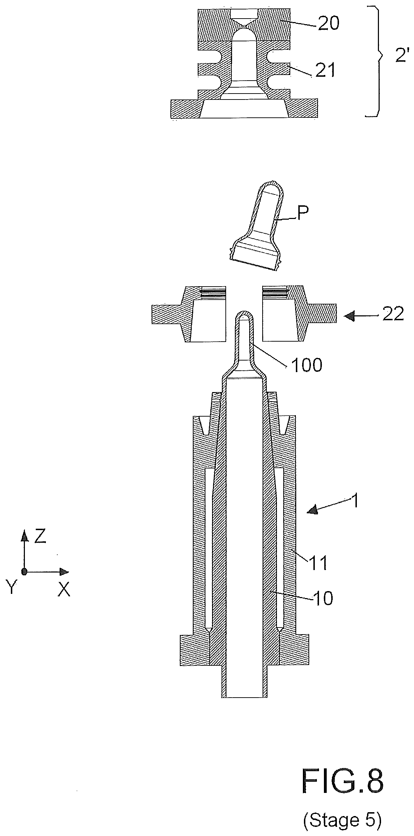

Once a thermoplastic material has been injected into the mold cavity MC through the gate insert 20 of the injection mold stack IMS of figure 4 (stage 1- locked state) and forms a solidified plastic preform P, the injection mold stack IMS in unlocked (stages 2 to 4 depicted on figures 5 to 7) and the cold molded preform P is ejected form the mold stack (stage 5 - figure 8).

### Unlocking operation

### From stage 1 (figure 4) to stage 2 (figure 5)

The assembly constituted by the neck ring 22 and the core assembly 1 (core 10/lock ring 11) is translated in the longitudinal direction (arrow F4) away from the fixed assembly 2'(cavity insert 21/gate insert 20). The preform P is pinched between the two half neck rings t 22a of the neck ring 22 and is thus withdrawn by the neck ring 22 outside the cavity insert 21 and gate insert 22.

### From stage 2 (figure 5) to stage 3 (figure 6)

The core assembly 1 (core 10/lock ring 11) is translated in the longitudinal direction (arrow F4) away from the neck ring 22 that still holds the preform P, in order to withdraw the part 100 of the core 10 from the preform P From stage 3 (figure 6) to stage 4 (figure 7)

This withdrawal movement of the core 10 is performed until (stage 4-figure 7), the protruding part 100 of the core 10 is positioned completely outside the preform P. Then the two half neck rings 22a of the neck ring 22 are moved laterally away one from the other (figure 7/ arrows F and F') in order to open the neck ring 22 and to free the preform P from the neck ring 22.

### Stage 5- Figure 8 : The preform P is ejected from the neck ring 22

### Locking operation

The locking operation of the injection mold stack is performed (from stage 5 of figure 8) by pushing laterally the two half neck rings 22a of the neck ring 22 towards each other, in such a way to close the neck ring 22 (position of the two half neck rings 22a shown on figure 6).

Then (configuration of figure 5 without the preform P) the core assembly 1 is moved longitudinally in order to fit the male locking portion 112 of the lock ring 11 into the locking cavity 226 of the neck ring 22 and in order to fit the front male locking portion 227 of the neck ring 22 into the annular locking cavity 113 of the lock ring 11.

Then the assembly constituted by the core assembly 1 (core 10/lock ring 11) and the closed neck ring 22 is pushed longitudinally towards the fixed assembly 2' (cavity insert 21/gate insert 20) in order to introduce the protruding part 100 of the core 10 inside the cavity insert 21 and gate insert 20, until the rear male locking portion 221 of the neck ring 22 is completely inserted in abutment inside the locking cavity 211 of the cavity insert 21 (Locked state of figure 4 without the preform P).

### Height H of the neck ring 22

Referring to figure 6, the height H of the neck ring 22 is not depending on the preform length L or design. The sole design constraint for the neck ring 22 in connection with the preform P is the design and dimension of the internal wall 221d (figure 7) of the rear male locking portion 221 for forming the neck portion E of the preform P. Consequently, the same neck ring 22 of the injection mold stack IMS of the invention can be used advantageously with different cavity inserts and gate inserts for making different types of preforms (preforms having the same neck portion E but having different lengths L or different body B geometries or different bottom end D geometries) without modifying the neck ring 22, and in particular without increasing the height H of the neck ring 22. This neck ring 22 can thus advantageously be compact (small height H) even for making long preform.

### Symmetry of the neck ring 22

In reference to figure 7, the neck ring 22 can be easily designed in such a way the height h1 of the front male locking portion 227 is substantially equal to the height h2 of the rear male locking portion 221 and in such a way that the conical wall 221a of the rear male locking portion 221 and the conical wall 227a of the male locking portion 227 are substantially symmetrical about a central transverse plane P' that is perpendicular to the longitudinal axis A.

As a result, the locking force that is applied directly on the central holding portion 229 of the half neck rings 22a for closing the neck ring 22 is distributed substantially uniformly on each side of transverse plane P, which leads to a better and well balanced translation movements of the two half neck rings 22a during the locking operations. In addition, the mechanical forces applied between the neck ring 22 and the cavity insert 21 and between the neck ring 22 and the lock ring 11 are well balanced, which reduces advantageously the wear of the neck ring 22, cavity insert 21 and lock ring 11.

Furthermore, in the injection molding stack IMS of the invention, the areas of the contact surfaces (226a and 112a) between the neck ring 22 and the lock ring 11 can be advantageously high, without a strong prejudice for the compactness of the neck ring. This means that a low locking pressure exerted onto the two neck rings 22a of the neck ring 22 can be advantageously transformed into a high clamping forces applied on the lock ring 11 by the two half neck rings 22a of the neck ring.22. The injection mold stack of the invention can thus be used with less hydraulic or pneumatic energy.

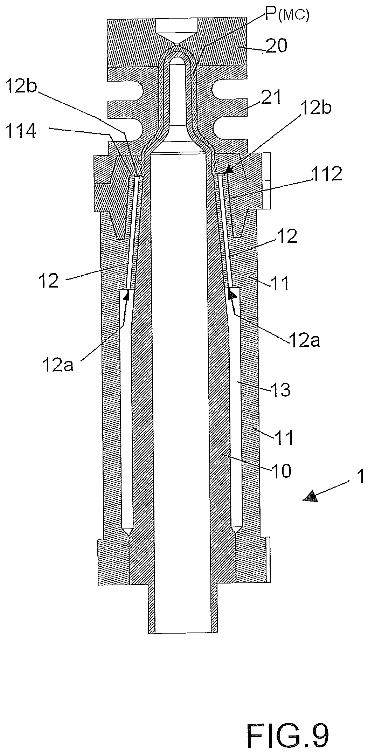

### Preform ejection - air-blowing channels- Figures 9

Optionally, in reference to figure 9, the lock ring 11 comprises air-blowing channels 12. In the particular embodiment of figure 9, these channels 12 are drilled through the lock ring 11, and more especially through the rear male locking portion 112. Each air-blowing channel 12 is opened at both end and thus comprises an inlet opening 12a for the admission of air in the channel 12 and an outlet opening 12b for the blowing of air outside the channel 12. The inlet opening 12a is communicating with the internal chamber 13 delimited inside the core assembly 1 between the core 10 and the lock ring 11. The outlet opening 12b is made in the front wall 114 of the male locking portion 112.

In operation, for assisting the preform ejection (stage 6- figure 7), air under pressure is introduced inside the internal chamber 13 of the core assembly 1. This air under pressure penetrates inside the air-blowing channels 12 via the inlet openings 12a and is blown outside the air-blowing channels 12 via the outlet openings 12b, in the form of air jets of high velocity oriented towards the neck portion E of the preform P.

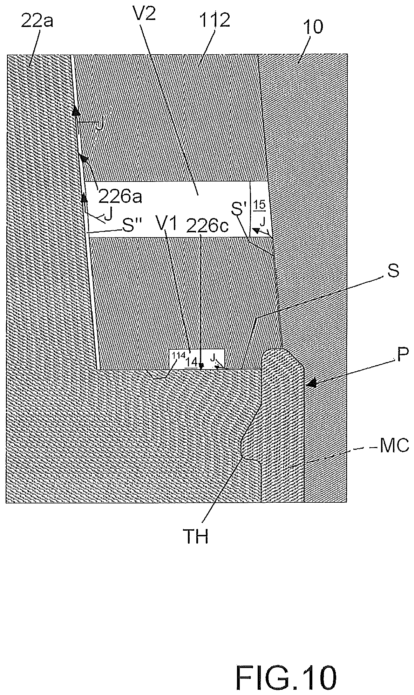

### Figure 10 - vents

In reference to the enlargement view of figure 10, the injection mold stack comprises for each half neck rings 22a two venting channels V1, V2 for escaping air from the mold cavity MC into the outside of the injection mold stack, during the injection stage of the thermoplastic material in the mold cavity (MC).

The venting channel V1 comprises an annular groove 14 made in the rear wall 114 of the rear male locking portion 112 that is facing the bottom wall 226c of the front locking cavity 226 of the neck ring 22. This annular groove 14 surrounds the mold cavity MC. The venting channel V1 also comprises an annular venting portion S, in the form of a small space S that is provided between this bottom wall 226c and the rear wall 114, and that surrounds the mold cavity MC. This annular space S communicates at one end with the mold cavity MC and at the other end with the groove 14. The groove 14 thus communicates with the mold cavity MC through this small space S. The groove 14 also communicates with the outside of the injection mold stack through a groove (not shown) made in the half neck ring 22a.

The venting channel V2 comprises a hole15 that is drilled trough the rear male locking portion 112, and that is opened at both ends, and two venting portions in the form of annular spaces S', S". At one end, this hole 15 communicates with the mold cavity MC through the small annular space S' that is provided in this particular embodiment between the core 10 and rear male locking portion 112 of the lock ring 1. At the opposite end, this hole 15 communicates with the outside of the injection mold stack IMS through the annular space S" that is provided between the rear male locking portion 112 and the conical lateral wall 226a of the front locking cavity 226 of the neck ring 22.

In operation, when the thermoplastic material is injected in the mold cavity MC through the gate insert 20, the thermoplastic material pushes the air contained in the mold cavity MC, and this air escapes from the mold cavity MC into the outside of the injection mold stack IMS through the venting channels V1, V2 (Figure 10 / air flows represented by arrows J).

### Figure 11

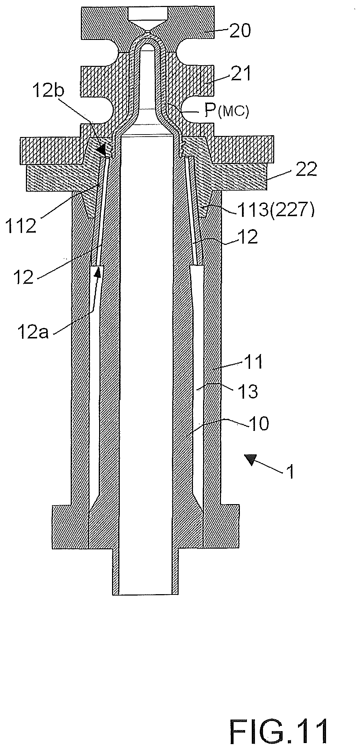

Figure 11 shows another variant of an injection mold stack which is not part of the invention wherein the rear annular cavity 113 is in the lock ring 11 of the core assembly 1, but wherein the conical rear male locking portion 112 of the core assembly 1 is not a part of the lock ring 11 (like in the embodiment of figure 4) but is a part of the central core 10 of the core assembly 1.

### Figure 12

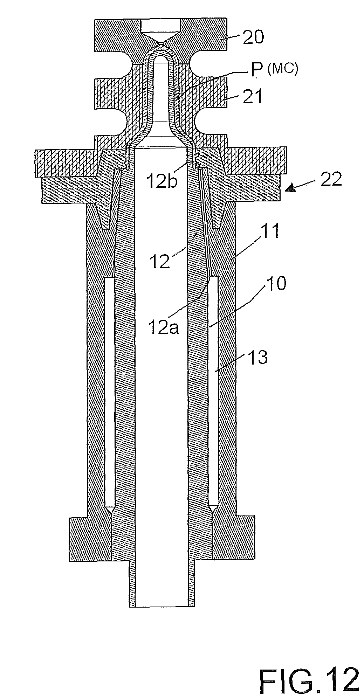

Figure 12 shows another variant of an injection mold stack of the invention, wherein an air-blowing channel 12 for assisting the preform ejection is delimited by the outer face of the central core 10 and by a groove made in the inner face of lock ring 11.

## Claims

1. An injection mold stack (IMS) comprising a core assembly (1) and a cavity assembly (2), wherein the core assembly (1) comprises a central core (10) surrounded by an external lock ring (11) and at least a portion (100) of the core assembly (1) is adapted to delimit a molding cavity (MC) with the cavity assembly (2), wherein the cavity assembly (2) comprises a cavity insert (21) and a neck ring (22) that is positioned between the cavity insert (21) and the core assembly (1), wherein the said neck ring (22) comprises a front locking cavity (226) and a front male locking portion (227) oriented towards the core assembly, wherein the front locking cavity (226) comprises a front opening (226d) oriented towards the core assembly (1), and a lateral wall (226a) of conical shape whose apex (226b) is oriented towards the cavity insert (21), wherein the front male locking portion (227) comprises an outer wall (227a) of conical shape, whose apex (227b) is oriented towards the core assembly (1), and that surrounds the front locking cavity (226), wherein the external lock ring (11) of the core assembly (1) comprises a rear male locking portion (112) and a rear annular cavity (113) oriented towards the neck ring (22), wherein the rear male locking portion (112) comprises an outer wall (112a) of conical shape whose apex (112b) is oriented towards the neck ring (22), wherein the rear annular cavity (113) surrounds the said rear male locking portion (112), and comprises an annular opening (113c) oriented towards the neck ring (22), and a lateral wall (113a) of conical shape whose base is oriented towards the neck ring (22), wherein the conical front locking cavity (226), the conical front male locking portion (227), the conical rear male locking portion (112) and the conical annular rear cavity (113) are adapted to align and lock the core assembly (1) with the neck ring (22) by translating longitudinally the core assembly (1) towards the neck ring (22) or vice versa, so that the conical rear male locking portion (112) is fitted into the conical front locking cavity (226) and the conical front male locking portion (227) is fitted into the conical rear annular cavity (113), the injection mold stack further comprising at least first (V1) and second (V2) venting channels for escaping air from the mold cavity (MC), wherein the first venting channel (V1) comprises a first venting portion (S) that communicates with the mold cavity (MC), and that is defined between the rear male locking portion (112) of the external lock ring (11) and the neck ring (22), and the second venting channel (V2) comprises a second venting portion (S'), that communicates with the mold cavity (MC), and that is defined between the rear male locking portion (112) of the external lock ring (11) and the central core (10).

2. The injection mold stack (IMS) of claim 1, wherein the first venting channel (V1) comprises a groove (14) made in a rear wall (114) of the rear male locking portion (112) of the of the external lock ring (11) that is facing the bottom wall (226c) of the front locking cavity (226) of the neck ring (22), said groove (14) communicating with the first venting portion (S).

3. The injection mold stack (IMS) of claim 1 or 2, wherein the first venting portion is constituted by a small space (S) between the rear male locking portion (112) of the external lock ring (11) and the neck ring (22).

4. The injection mold stack (IMS) of any one of claims 1 to 3, wherein the second venting portion is constituted by a small space (S') between the rear male locking portion (112) of the external lock ring (11) and the central core (10).

5. The injection mold stack (IMS) of any one of claims 1 to 4, wherein the second venting channel (V2) comprises a hole (15) that is drilled through the rear male locking portion (112) of the external lock ring (11), and that communicates at one end with the second venting portion (S').

6. The injection mold stack (IMS) of claim 5, wherein the second venting channel (V2) comprises a third venting portion (S") constituted by a by a small space (S") between the rear male locking portion (112) of the external lock ring (11) and the neck ring (22), and the hole (15) communicates at with said third venting portion (S").

7. The injection mold stack (IMS) of any one of claims 1 to 6, wherein the cavity insert (21) comprises a front locking cavity (211) comprising a front opening (211d) oriented towards the neck ring (22), and a lateral wall (211 a) of conical shape whose apex (211b) is oriented towards the gate insert (21), wherein the neck ring (22) comprises a rear male locking portion (221) comprising an outer wall (221a) of conical shape whose apex (221b) is oriented towards the cavity insert (21), and wherein the said conical rear male locking portion (221) of the neck ring (22) and the said conical front locking cavity (211) of the cavity insert (21) are adapted to align and lock the neck ring (22) with the cavity insert (21) by translating longitudinally the neck ring (22) towards the cavity insert (21) or vice versa, so that the conical rear male locking portion (221) is fitted into the conical front locking cavity (211).

8. The injection mold stack (IMS) of any one of claims 1 to 7, wherein the conical rear male locking portion (112) of the external lock ring (11) comprises a protruding part (112c) that protrudes outside the conical rear annular cavity (113) of the external lock ring (11) and towards the neck ring (22).

9. The injection mold stack (IMS) of any one of claims 1 to 8, wherein the height (h1) of the neck ring front male locking portion (227) is substantially equal to the height (h2) of the neck ring rear male locking portion (221).

10. The injection mold stack (IMS) of any one of claims 1 to 9, wherein the conical outer wall (221a) of the rear male locking portion (221) of the neck ring (22) and the conical outer wall (227a) of the front male locking portion (227) of the neck ring (22) are substantially symmetrical about a central transverse plane (P') that is perpendicular to a longitudinal alignment axis A of the injection mold stack.

11. The injection mold stack (IMS) of any one of claims 1 to 10, wherein the neck ring (22) comprises two half neck rings (22) that can be moved laterally in such a way to form a closed or opened neck ring (22).

12. The injection mold stack (IMS) of any one of claims 1 to 11, wherein the core assembly (1) comprises at least one air-blowing channel (12) that is adapted to blow an air jet towards the neck ring (22) for assisting the ejection of a molded article.

13. The injection mold stack (IMS) of claim 12, wherein the at least one air-blowing channel (12) is made through the conical rear male locking portion (112) of the core assembly (1).

14. A core assembly (1) of an injection mold stack (IMS) wherein the core assembly (1) comprises a rear side adapted to be oriented towards a molding cavity (MC) of the injection mold stack (IMS) and an opposite front side, wherein the core assembly (1) comprises on its rear side a rear male locking portion (112), a rear annular cavity (113) and a protruding portion (100) that is adapted to delimit said molding cavity (MC), wherein the rear male locking portion (112) comprises an outer wall (112a) of conical shape whose apex (112b) is oriented towards the rear side, wherein the rear annular cavity (113) surrounds the said rear male locking portion (112), and comprises an rear annular opening (113c) and a lateral wall of conical shape whose base is oriented towards the rear side, wherein the core assembly (1) comprises a central core (10) surrounded by an external lock ring (11), **characterized in that** the conical rear male locking portion (112) of the core assembly (1) is a part of the lock ring (11) and the rear annular cavity (113) is in the lock ring (11), and wherein the core assembly (1) comprises a hole (15) for escaping air, said hole (5) being made through the rear male locking portion (112) and being opened at both ends.

15. The core assembly of claim 14, further comprising at least one air-blowing channel (12) that is adapted to blow an air jet for assisting the ejection of a molded article.

16. The core assembly of claim 15, wherein the at least one air-blowing channel (12) is made through the conical rear male locking portion (112) of the core assembly (1).

17. The core assembly of any one of claims 14 to 16, comprising a groove (14) for escaping air, said groove (14) being made in a rear wall (114) of the rear male locking portion (112).

18. A molding apparatus comprising an injection mold stack (IMS) of any one of claims 1 to 13, and an injection unit for injecting a melted thermoplastic material in the mold cavity (MC) of the injection mold stack (IMS).

19. The use of the injection mold stack (IMS) of any one of claims 1 to 13 or of the molding apparatus of claim 18 for molding a plastic article, and more particularly a plastic preform (P).

## Patentansprüche

1. **Spritzgusssäule (IMS),** umfassend eine Kernbaugruppe (1) und eine Hohlraumbaugruppe (2), wobei die Kernbaugruppe (1) einen Zentralkern (10) aufweist, der von einem externen Schließring (11) umgeben ist und zumindest ein Abschnitt (100) der Kernbaugruppe (1) so beschaffen ist, dass er eine Formkavität (MC) mit der Hohlraumbaugruppe (2) begrenzt, wobei die Hohlraumbaugruppe (2) einen Hohlraumeinsatz (21) und einen Halsring (22) umfasst, der zwischen dem Hohlraumeinsatz (21) und der Kernbaugruppe (1) angeordnet ist, wobei der Halsring (22) eine vordere Verriegelungskavität (226) und einen zu der Kernbaugruppe hin orientierten vorderen Steckverriegelungsabschnitt (227) aufweist, wobei die vordere Verriegelungskavität (226) eine zu der Kernbaugruppe (1) hin orientierte vordere Öffnung (226d) aufweist, sowie eine konisch geformte Seitenwand (226a), deren Apex (226b) zu dem Hohlraumeinsatz (21) hin orientiert ist, wobei der vordere Steckverriegelungsabschnitt (227) eine konisch geformte Außenwand (227a) hat, deren Apex (227b) zu der Kernbaugruppe (1) hin orientiert ist und die vordere Verriegelungskavität (226) umgibt, wobei der externe Schließring (11) der Kernbaugruppe (1) einen hinteren Steckverriegelungsabschnitt (112) sowie einen zu dem Halsring (22) hin orientierten hinteren ringförmigen Hohlraum (113) aufweist, wobei der hintere Steckverriegelungsabschnitt (112) eine konisch geformte Außenwand (112a) aufweist, deren Apex (112b) zu dem Halsring (22) hin orientiert ist, wobei der hintere ringförmige Hohlraum (113) den hinteren Steckverriegelungsabschnitt (112) umgibt und eine zu dem Halsring (22) hin orientierte ringförmige Öffnung (113c) sowie eine konisch geformte Seitenwand (113a) aufweist, deren Basis zu dem Halsring (22) hin orientiert ist, wobei die konische vordere Verriegelungskavität (226), der konische vordere Steckverriegelungsabschnitt (227), der konische hintere Steckverriegelungsabschnitt (112) und der konische ringförmige hintere Hohlraum (113) angepasst sind, die Kernbaugruppe (1) mit dem Halsring (22) auszurichten und zu verschließen, indem sie die Kernbaugruppe (1) in Längsrichtung zu dem Halsring (22) hin verschieben oder umgekehrt, so dass der konische hintere Steckverriegelungsabschnitt (112) in die konische vordere Verriegelungskavität (226) eingepasst ist und der konische vordere Steckverriegelungsabschnitt (227) in die konische hintere ringförmige Kavität (113) eingepasst ist, wobei die Spritzgusssäule außerdem mindestens einen ersten (V1) und einen zweiten (V2) Entlüftungskanal für die aus der Formkavität (MC) entweichende Luft aufweist, wobei der erste Entlüftungskanal (V1) einen ersten Entlüftungsabschnitt (S) umfasst, der mit der Formkavität (MC) in Verbindung steht und definiert ist zwischen dem hinteren Steckverbindungsabschnitt (112) des externen Schließrings (11) und dem Halsring (22), und der zweite Entlüftungskanal (V2) einen zweiten Entlüftungsabschnitt (S') umfasst, der mit der Formkavität (MC) in Verbindung steht und definiert ist zwischen dem hinteren Steckverriegelungsabschnitt (112) des externen Schließrings (11) und dem Zentralkern (10).

2. Spritzgusssäule (IMS) nach Anspruch 1, wobei der erste Entlüftungskanal (V1) eine Nut (14) in einer Rückwand (114) des hinteren Steckverriegelungsabschnitts (112) des externen Schließrings (11) aufweist, der zu der vorderen Bodenwand (226c) der vorderen Verriegelungskavität (226) des Halsrings (22) zeigt, wobei die Nut (14) mit dem ersten Entlüftungsabschnitt (S) in Verbindung steht.

3. Spritzgusssäule (IMS) nach Anspruch 1 oder 2, wobei der erste Entlüftungsabschnitt aus einem kleinen Raum (S) zwischen dem hinteren Steckverriegelungsabschnitt (112) des externen Schließrings (11) und dem Halsring (22) besteht.

4. Spritzgusssäule (IMS) nach einem der Ansprüche 1 bis 3, wobei der zweite Entlüftungsabschnitt aus einem kleinen Raum (S') zwischen dem hinteren Steckverriegelungsabschnitt (112) des externen Schließrings (11) und dem Zentralkern (10) besteht.

5. Spritzgusssäule (IMS) nach einem der Ansprüche 1 bis 4, wobei der zweite Entlüftungskanal (V2) ein Loch (15) aufweist, die durch den hinteren Steckverriegelungsabschnitt (112) des externen Schließrings (11) gebohrt ist und an einem Ende mit dem zweiten Entlüftungsabschnitt (S') in Verbindung steht.

6. Spritzgusssäule (IMS) nach Anspruch 5, wobei der zweite Entlüftungskanal (V2) einen dritten Entlüftungsabschnitt (S") umfasst, der aus einem kleinen Raum (S") zwischen dem hinteren Steckverriegelungsabschnitt (112) des externen Schließrings (11) und dem Halsring (22) besteht und wobei das Loch (15) mit dem dritten Entlüftungsabschnitt (S") in Verbindung steht.

7. Spritzgusssäule (IMS) nach einem der Ansprüche 1 bis 6, wobei der Hohlraumeinsatz (21) eine vordere Verriegelungskavität (211) mit einer zu dem Halsring (22) hin gerichteten vorderen Öffnung (211d) umfasst sowie eine konisch geformte Seitenwand (211a), deren Apex (211b) zu dem Eingußeinsatz (21) hin orientiert ist, wobei der Halsring (22) einen hinteren Steckverriegelungsabschnitt (221) hat mit einer konisch geformten Außenwand (221a), deren Apex (221b) zu dem Hohlraumeinsatz (21) hin orientiert ist, und wobei der konische hintere Verriegelungsabschnitt (221) des Halsrings (22) und die konische vordere Verriegelungskavität (211) des Hohlraumeinsatzes (21) so beschaffen sind, dass sie aufeinander ausgerichtet sind und den Halsring (22) mit dem Hohlraumeinsatz (21) verriegeln, indem sie den Halsring (22) in Längsrichtung zu dem Hohlraumeinsatz (21) hin verschieben oder umgekehrt, so dass der konische hintere Steckverriegelungsabschnitt (221) in die konische vordere Verriegelungskavität (211) eingefügt wird.

8. Spritzgusssäule (IMS) nach einem der Ansprüche 1 bis 7, wobei der konische hintere Steckverriegelungsabschnitt (112) des externen Schließrings (11) einen hervorstehenden Abschnitt (112c) aufweist, der an der Außenseite der konischen hinteren, ringförmigen Kavität (113) des externen Schließrings (11) und zu dem Halsring (22) hin hervorsteht.

9. Spritzgusssäule (IMS) nach einem der Ansprüche 1 bis 8, wobei die Höhe (h1) des vorderen Steckverriegelungsabschnittes (227) am Halsring im Wesentlichen gleich ist der Höhe (h2) des hinteren Steckverriegelungsabschnittes (221) am Halsring.

10. Spritzgusssäule (IMS) nach einem der Ansprüche 1 bis 9, wobei die konische Außenwand (221a) des hinteren Steckverriegelungsabschnitts (221) des Halsrings (22) und die konische Außenwand (227a) des vorderen Steckverriegelungsabschnitts (227) des Halsrings (22) im Wesentlichen symmetrisch um eine mittlere Querebene (P') liegen, die senkrecht zu einer Längsausrichtungsebene A der Spritzgusssäule verläuft.

11. Spritzgusssäule (IMS) nach einem der Ansprüche 1 bis 10, wobei der Halsring (22) zwei halbe Halsringe (22) hat, die derart seitlich verschoben werden können, dass sie einen geschlossenen oder geöffneten Halsring (22) bilden.

12. Spritzgusssäle (IMS) nach einem der Ansprüche 1 bis 11, wobei die Kernbaugruppe (1) mindestens einen Luftblaskanal (12) hat, der so ausgelegt ist, dass er einen Luftstrom zu dem Halsring (22) hin bläst, um das Ausstoßen eines Formteils zu unterstützen.

13. Spritzgusssäule (IMS) nach Anspruch 12, wobei der mindestens eine Luftblaskanal (12) durch den konisch geformten hinteren Steckverriegelungsabschnitt (112) der Kernbaugruppe (1) verläuft.

14. **Kernbaugruppe (1)** einer Spritzgusssäule (IMS), wobei die Kernbaugruppe (1) eine Rückseite umfasst, die so ausgelegt ist, dass sie zu einer Formkavität (MC) der Spritzgusssäule (IMS) hin orientiert ist sowie eine gegenüberliegende Vorderseite, wobei die Kernbaugruppe (1) an ihrer Rückseite einen hinteren Steckverriegelungsabschnitt (112) hat, einen hinteren ringförmigen Hohlraum (113) und einen hervorstehenden Abschnitt (100), der so ausgerichtet ist, dass er die Formkavität (MC) begrenzt, wobei der hintere Steckverriegelungsabschnitt (112) eine konisch geformte Außenwand (112a) hat, deren Apex (112b) zu der Rückseite hin orientiert ist, wobei der hintere ringförmige Hohlraum (113) den hinteren Steckverriegelungsabschnitt (112) umgibt und eine hintere ringförmige Öffnung (113c) sowie eine konisch geformte Seitenwand umfasst, deren Sockel zu der Rückseite hin orientiert ist, wobei die Kernbaugruppe (1) einen Zentralkern (10) hat, der von einem externen Schließring (11) umgeben ist, **dadurch gekennzeichnet, dass**
der konisch geformte hintere Steckverriegelungsabschnitt (112) der Kernbaugruppe (1) ein Teil des Schließrings (11) ist, und die hintere ringförmige Kavität (113) im Schließring (11) liegt, und wobei die Kernbaugruppe (1) ein Loch (15) für entweichende Luft aufweist, wobei dieses Loch (5) durch den hinteren Steckverriegelungsabschnitt (112) läuft und an beiden Enden offen ist.

15. Kernbaugruppe nach Anspruch 14, außerdem umfassend mindestens einen Luftblaskanal (12), der so ausgelegt ist, dass er einen Luftstrom abgibt, um den Auswurf eines Formteils zu unterstützen.

16. Kernbaugruppe nach Anspruch 15, wobei der mindestens eine Luftblaskanal (12) durch den konischen hinteren Steckverriegelungsabschnitt (112) der Kernbaugruppe (1) läuft.

17. Kernbaugruppe nach einem der Ansprüche 14 bis 16, mit einer Nut (14) für entweichende Luft, die sich in einer Rückwand (114) des hinteren Steckverriegelungsabschnitts (112) befindet.

18. **Formvorrichtung,** umfassend eine Spritzgusssäule (IMS) nach einem der Ansprüche 1 bis 13 und eine Einspritzeinheit zum Einspritzen geschmolzenen thermoplastischen Materials in den Formhohlraum (MC) der Spritzgusssäule (IMS).

19. **Verwendung** der Spritzgusssäule (IMS) nach einem der Ansprüche 1 bis 13 oder der Formvorrichtung nach Anspruch 18 zum Formen eines Kunststoffteiles, insbesondere einer Vorform (P) aus Kunststoff.

## Revendications

1. Moule d'injection à empilage (IMS) comprenant un ensemble de noyau (1) et un ensemble de cavité (2), dans lequel l'ensemble de noyau (1) comprend un noyau central (10) entouré par un anneau de verrouillage externe (11) et au moins une partie (100) de l'ensemble de noyau (1) est adaptée pour délimiter une cavité de moulage (MC) avec l'ensemble de cavité (2), dans lequel l'ensemble de cavité (2) comprend un insert de cavité (21) et une bague de col (22) qui est positionnée entre l'insert de cavité (21) et l'ensemble de noyau (1), dans lequel ladite bague de col (22) comporte une cavité de verrouillage avant (226) et une partie de verrouillage mâle avant (227) orientée en direction de l'ensemble de noyau, dans lequel la cavité de verrouillage avant (226) comporte une ouverture avant (226d) orientée en direction de l'ensemble de noyau (1), et une paroi latérale (226a) de forme conique dont le sommet (226b) est orienté en direction de l'insert de cavité (21), dans lequel la partie de verrouillage mâle avant (227) comprend une paroi extérieure (227a) de forme conique, dont le sommet (227b) est orienté en direction de l'ensemble de noyau (1), et qui entoure la cavité de verrouillage avant (226), dans lequel l'anneau de verrouillage externe (11) de l'ensemble de noyau (1) comprend une partie de verrouillage mâle arrière (112) et une cavité annulaire arrière (113) orientée en direction de la bague de col (22), dans lequel la partie de verrouillage mâle arrière (112) comprend une paroi extérieure (112a) de forme conique dont le sommet (112b) est orienté en direction de la bague de col (22), dans lequel la cavité annulaire arrière (113) entoure ladite partie de verrouillage mâle arrière (112), et comporte une ouverture annulaire (113c) orientée en direction de la bague de col (22), et une paroi latérale (113a) de forme conique dont la base est orientée en direction de la bague de col (22), dans lequel la cavité de verrouillage avant conique (226), la partie de verrouillage mâle avant conique (227), la partie de verrouillage mâle arrière conique (112) et la cavité arrière annulaire conique (113) sont adaptées pour aligner et verrouiller l'ensemble de noyau (1) avec la bague de col (22) en déplaçant de façon longitudinale l'ensemble de noyau (1) en direction de la bague de col (22) ou vice versa, de telle sorte que la partie de verrouillage mâle arrière conique (112) soit agencée dans la cavité de verrouillage avant conique (226) et que la partie de verrouillage mâle avant conique (227) soit agencée dans la cavité annulaire arrière conique (113), le moule d'injection à empilage comprenant en outre au moins des premier (V1) et second (V2) canaux de ventilation pour laisser s'échapper l'air de la cavité de moule (MC), dans lequel le premier canal de ventilation (V1) comprend une première partie de ventilation (S) qui communique avec la cavité de moule (MC), et qui est définie entre la partie de verrouillage mâle arrière (112) de l'anneau de verrouillage externe (11) et la bague de col (22), et le second canal de ventilation (V2) comprend une deuxième partie de ventilation (S') qui communique avec la cavité de moule (MC), et qui est définie entre la partie de verrouillage mâle arrière (112) de l'anneau de verrouillage externe (11) et le noyau central (10).

2. Moule d'injection à empilage (IMS) selon la revendication 1, dans lequel le premier canal de ventilation (V1) comporte une rainure (14) formée dans une paroi arrière (114) de la partie de verrouillage mâle arrière ((112) de l'anneau de verrouillage externe (11) qui fait face à la paroi de fond (226c) de la cavité de verrouillage avant (226) de la bague de col (22), ladite rainure (14) communiquant avec la première partie de ventilation (S).

3. Moule d'injection à empilage (IMS) selon la revendication 1 ou 2, dans lequel la première partie de ventilation est constituée par un petit espace (S) entre la partie de verrouillage mâle arrière (112) de l'anneau de verrouillage externe (11) et la bague de col (22).

4. Moule d'injection à empilage (IMS) selon l'une quelconque des revendications 1 à 3, dans lequel la deuxième partie de ventilation est constituée par un petit espace (S') entre la partie de verrouillage mâle arrière (112) de l'anneau de verrouillage externe (11) et le noyau central (10).

5. Moule d'injection à empilage (IMS) selon l'une quelconque des revendications 1 à 4, dans lequel le second canal de ventilation (V2) comporte un trou (15) qui est percé à travers la partie de verrouillage mâle arrière (112) de l'anneau de verrouillage externe (11), et qui communique à une première extrémité avec la deuxième partie de ventilation (S').

6. Moule d'injection à empilage (IMS) selon la revendication 5, dans lequel le second canal de ventilation (V2) comprend une troisième partie de ventilation (S'') constituée par un petit espace (S'') entre la partie de verrouillage mâle arrière (112) de l'anneau de verrouillage externe (11) et la bague de col (22), et le trou (15) communique avec ladite troisième partie de ventilation (S'').

7. Moule d'injection à empilage (IMS) selon l'une quelconque des revendications 1 à 6, dans lequel l'insert de cavité (21) comprend une cavité de verrouillage avant (211) comportant une ouverture avant (211d) orientée en direction de la bague de col (22), et une paroi latérale (211a) de forme conique dont le sommet (211b) est orienté en direction de l'insert de cavité (21), dans lequel la bague de col (22) comprend une partie de verrouillage mâle arrière (221) comprenant une paroi extérieure (221a) de forme conique dont le sommet (221b) est orienté en direction de l'insert de cavité (21), et dans lequel ladite partie de verrouillage mâle arrière conique (221) de la bague de col (22) et ladite cavité de verrouillage avant conique (211) de 1' insert de cavité (21) sont adaptées pour aligner et verrouiller la bague de col (22) avec l'insert de cavité (21) en déplaçant de façon longitudinale la bague de col (22) en direction de l'insert de cavité (21) ou vice versa, de telle sorte que la partie de verrouillage mâle arrière conique (221) soit agencée dans la cavité de verrouillage avant conique (211).

8. Moule d'injection à empilage (IMS) selon l'une quelconque des revendications 1 à 7, dans lequel la partie de verrouillage mâle arrière (112) de l'anneau de verrouillage externe (11) comprend une partie saillante (112c) qui fait saillie à l'extérieur de la cavité annulaire arrière conique (113) de l'anneau de verrouillage externe (11) et en direction de la bague de col (22).

9. Moule d'injection à empilage (IMS) selon l'une quelconque des revendications 1 à 8, dans lequel la hauteur (h1) de la partie de verrouillage mâle avant (227) de la bague de col est sensiblement égale à la hauteur (h2) de la partie de verrouillage mâle arrière (221) de la bague de col.

10. Moule d'injection à empilage (IMS) selon l'une quelconque des revendications 1 à 9, dans lequel la paroi extérieure conique (221a) de la partie de verrouillage mâle arrière (221) de la bague de col (22) et la paroi extérieure conique (227a) de la partie de verrouillage mâle avant (227) de la bague de col (22) sont sensiblement symétriques par rapport à un plan transversal central (P') qui est perpendiculaire à un axe d'alignement longitudinal A du moule d'injection à empilage.

11. Moule d'injection à empilage (IMS) selon l'une quelconque des revendications 1 à 10, dans lequel la bague de col (22) comprend deux demi-bagues de col (22) qui peuvent être déplacées latéralement de manière à former une bague de col ouverte ou fermée (22).

12. Moule d'injection à empilage (IMS) selon l'une quelconque des revendications 1 à 11, dans lequel l'ensemble de noyau (1) comprend au moins un canal de soufflage d'air (12) qui est adapté pour souffler un jet d'air en direction de la bague de col (22) afin d'assister l'éjection d'un article moulé.

13. Moule d'injection à empilage (IMS) selon la revendication 12, dans lequel ledit au moins un canal de soufflage d'air (12) est formé à travers la partie de verrouillage mâle arrière conique (112) de l'ensemble de noyau (1).

14. Ensemble de noyau (1) d'un moule d'injection à empilage (IMS), dans lequel l'ensemble de noyau (1) comprend un côté arrière adapté pour être orienté en direction d'une cavité de moulage (MC) du moule d'injection à empilage (IMS) et un côté avant opposé, dans lequel l'ensemble de noyau (1) comprend sur son côté arrière une partie de verrouillage mâle arrière (112), une cavité annulaire arrière (113) et une partie saillante (100) qui est adaptée pour délimiter ladite cavité de moulage (MC), dans lequel la partie de verrouillage mâle arrière (112) comprend une paroi extérieure (112a) de forme conique dont le sommet (112b) est orienté en direction du côté arrière, dans lequel la cavité annulaire arrière (113) entoure ladite partie de verrouillage mâle arrière (112), et comporte une ouverture annulaire arrière (113c) et une paroi latérale de forme conique dont la base est orientée en direction du côté arrière, dans lequel l'ensemble de noyau (1) comprend un noyau central (10) entouré par un anneau de verrouillage externe (11), **caractérisé en ce que** la partie de verrouillage mâle arrière (112) de l'ensemble de noyau (1) est une partie de l'anneau de verrouillage (11) et la cavité annulaire arrière (113) se trouve dans l'anneau de verrouillage (11), et dans lequel l'ensemble de noyau (1) comporte un trou (15) pour laisser s'échapper de l'air, ledit trou (5) étant formé à travers la partie de verrouillage mâle arrière (112) et étant ouvert aux deux extrémités.

15. Ensemble de noyau selon la revendication 14, comprenant en outre au moins un canal de soufflage d'air (12) qui est adapté pour souffler un jet d'air pour assister l'éjection d'un article moulé.

16. Ensemble de noyau selon la revendication 15, dans lequel ledit au moins un canal de soufflage d'air (12) est formé à travers la partie de verrouillage mâle arrière conique (112) de l'ensemble de noyau (1).

17. Ensemble de noyau selon l'une quelconque des revendications 14 à 16, comportant une rainure (14) pour laisser s'échapper de l'air, ladite rainure (14) étant formée dans une paroi arrière (114) de la partie de verrouillage mâle arrière (112).

18. Appareil de moulage comprenant un moule d'injection à empilage (IMS) selon l'une quelconque des revendications 1 à 13, et une unité d'injection pour injecter un matériau thermoplastique fondu dans la cavité de moule (MC) du moule d'injection à empilage (IMS).

19. Utilisation du moule d'injection à empilage (IMS) selon l'une quelconque des revendications 1 à 13 ou de l'appareil de moulage selon la revendication 18 pour mouler un article de plastique, et plus particulièrement une préforme de plastique (P).
